# EUROPEAN PATENT APPLICATION

(11) **EP 4 851 689 A1**
(43) Date of publication of application: **09.12.2026**
(21) Application number: 25902780.3
(22) Date of filing: 21.07.2025
(51) Int. Cl.: G02B 6/44

(54) **LIGHTWEIGHT SUBMARINE CABLE AND PRODUCTION METHOD THEREFOR**

(30) Priority: 12.12.2024 CN 202411839106
(71) Applicant: Zhongtian Technology Submarine Cable Co., Ltd., Nantong, Jiangsu 226000 (CN)
(72) Inventor: WANG, Long, Nantong, Jiangsu 226000 (CN); HU, Ming, Nantong, Jiangsu 226000 (CN); GU, Chunfei, Nantong, Jiangsu 226000 (CN); NIU, Xuechao, Nantong, Jiangsu 226000 (CN); QIAO, Jing, Nantong, Jiangsu 226000 (CN)
(74) Representative: Boult Wade Tennant LLP
(86) International application number: PCT/CN2025/109599
(87) International publication number: WO 2026/123691

(57) **Abstract**

The present application provides a lightweight submarine cable and a production method therefor, relating to the technical field of optical cable manufacturing. The lightweight submarine cable includes: an optical fiber unit, including at least one optical fiber; and at least one armor layer, surrounding an outer side of the optical fiber unit; the armor layer includes a plurality of spirally-stranded plastic-coated steel wires, and each plastic-coated steel wire includes a steel wire core and a plastic layer wrapped around the steel wire core. The lightweight submarine cable provided by the present application can meet the requirements of high tensile strength, and has the characteristics of light weight and strong corrosion resistance, facilitating laying and transportation.

## Description

This application claims priority to Chinese patent application No. 202411839106.0, filed with the China National Intellectual Property Administration on December 12, 2024, and entitled "Lightweight Submarine Cable and Production Method Therefor", which is hereby incorporated by reference in its entirety.

### TECHNICAL FIELD

The present application relates to the technical field of optical cable manufacturing, and in particular, to a lightweight submarine cable and a production method therefor.

### BACKGROUND

Submarine cables are key infrastructure for international communications, carrying 95% of the global communication business and serving as a primary medium for information transmission. With the continuous development of information technology, the construction and maintenance of the submarine cables have become increasingly important to meet the growing communication demands.

Traditional submarine cables usually consist of a multi-layer structure, including an optical fiber core, an armor layer, and a sheath layer, etc. These structures can protect the optical fibers from the impact of submarine environment and ensure high-quality signal transmission.

However, although the multi-layer protective structure improves the strength of the submarine cable, it also reduces the flexibility of the submarine cable and increases its weight. Therefore, traditional submarine cables are usually large and heavy, making the submarine cables difficult to bend and install. The laying process may cause damage to the submarine ecology and affect the survival and reproduction of marine organisms.

### SUMMARY

In view of the above problems, embodiments of the present application provide a lightweight submarine cable and a production method therefor. The lightweight submarine cable can meet requirements of high tensile strength, and has characteristics of light weight and strong corrosion resistance, facilitating laying and transportation.

In order to achieve the above purposes, embodiments of the present application provide the following technical solutions.

One aspect of the present application provides a lightweight submarine cable, including: an optical fiber unit, including at least one optical fiber; and at least one armor layer, surrounding an outer side of the optical fiber unit; where the armor layer includes a plurality of spirally-stranded plastic-coated steel wires, and each plastic-coated steel wire includes a steel wire core and a plastic layer wrapped around the steel wire core.

In a possible implementation, the plastic layer is a fiber-reinforced composite layer.

In a possible implementation, at least two armor layers are provided, and the armor layers are each stacked in sequence from inside to outside.

In a possible implementation, gaps between the plastic-coated steel wires are filled with a water-blocking material.

In a possible implementation, the optical fiber unit includes a plurality of optical fibers, the plurality of optical fibers being each spirally-stranded, and the optical fiber unit further includes a loose tube sleeved over all the optical fibers;
where gaps between the optical fibers and gaps between the optical fibers and the loose tube are filled with a water-blocking fiber paste.

In a possible implementation, the lightweight submarine cable further includes: an inner sheath layer provided between the optical fiber unit and the armor layer.

In a possible implementation, the lightweight submarine cable further includes: at least one outer sheath layer surrounding an outer side of the armor layer.

In a possible implementation, the lightweight submarine cable further includes: a wrapping layer provided between the armor layer and the outer sheath layer.

Another aspect of the present application provides a production method for a lightweight submarine cable, including:
forming an optical fiber unit, the optical fiber unit including at least one optical fiber;
surrounding an outer side of the optical fiber unit with at least one armor layer.

Where, forming the armor layer includes: providing a steel wire core.

A plastic layer is wrapped around the steel wire core to form a plastic-coated steel wire.

A plurality of the plastic-coated steel wires are spirally stranded outside the optical fiber unit to form the armor layer.

In a possible implementation, after forming the armor layer, the method further includes: filling gaps between the plastic-coated steel wires with a water-blocking material.

In a possible implementation, the optical fiber unit includes a plurality of optical fibers, and the forming optical fiber unit includes: drawing each of the optical fibers.

A loose tube is sheathed over all the optical fibers, and gaps between the optical fibers and gaps between the optical fibers and the loose tube are filled with water-blocking fiber paste.

In a possible implementation, after surrounding an outer side of the optical fiber unit with the armor layer, the method further includes: forming a wrapping layer by winding outside the armor layer; forming at least one outer sheath layer by winding outside the wrapping layer.

The lightweight submarine cable and the production method therefor are provided in the present application, where the lightweight submarine cable includes an optical fiber unit and at least one armor layer. The optical fiber unit includes at least one optical fiber. The armor layer surrounds the outer side of the optical fiber unit and is formed by spirally stranding a plurality of plastic-coated steel wires. Where, the plastic-coated steel wire is formed by wrapping a plastic layer around a steel wire core. With this arrangement, the steel wire core in the plastic-coated steel wire can enhance the mechanical strength of the armor layer, ensuring the stability of the armor layer in submarine environment. At the same time, the plastic layer in the plastic-coated steel wire can reduce the weight of the armor layer, and can provide the armor layer with excellent corrosion resistance and flexibility. In this way, using plastic-coated steel wires as the armor layer of the lightweight submarine cable can effectively reduce the weight of the lightweight submarine cable while enabling the lightweight submarine cable to meet the requirements of high tensile strength. Moreover, it can make the lightweight submarine cable have excellent corrosion resistance and flexibility, effectively resisting physical wear and chemical erosion on the seabed, and extending the service life of the lightweight submarine cable.

### BRIEF DESCRIPTION OF DRAWINGS

In order to more clearly illustrate the technical solutions in the embodiments of the present application or in the prior art, the following briefly introduces the accompanying drawings required for use in the description of the embodiments or the prior art. Obviously, the accompanying drawings in the following description are some embodiments of the present application, and for those of ordinary skill in the art, other accompanying drawings can also be obtained based on these accompanying drawings without creative efforts.
FIG. 1 is a structural schematic diagram of a lightweight submarine cable provided by an embodiment of the present application;
FIG. 2 is a step flow chart of a production method for a lightweight submarine cable provided by an embodiment of the present application.

Description of reference numerals:
10 - lightweight submarine cable;
100 - optical fiber unit; 200 - armor layer; 300 - wrapping layer; 400 - inner sheath layer; 500 - outer sheath layer;
210 - plastic-coated steel wire;
211 - steel wire core;
212 - plastic layer.

### DESCRIPTION OF EMBODIMENTS

As described in the background art, submarine cables are the central nervous system of the global communication network, which is responsible for transmitting the majority of international data traffic across oceans. They play a key role in daily communications, international financial markets, and scientific research, ensuring the rapid flow of global information and promoting international cooperation and economic development. With the increasing global demand for high-speed internet and data transmission, the construction and maintenance of the submarine cables have become increasingly important.

Traditional submarine cables mostly use galvanized steel wires as an armor layer. The galvanized steel wires have excellent mechanical strength, and are capable of providing necessary tensile strength and compressive resistance for the submarine cable, ensuring that the submarine cable is not easily broken or deformed during laying and use.

However, because the galvanized steel wires are heavy, it can easily make the overall submarine cable heavy. This weight burden not only requires the submarine cable to rely on large specialized laying ships and heavy equipment during the laying process, but also limits its flexibility in shallow water areas and complex terrains. During laying, a large bending radius requires a wider operating space, increasing construction difficulty and time.

Secondly, the large equipment and ships used during the laying process may cause damage to the submarine ecosystem. The operation of mechanical equipment may disturb the seabed, affect the habitats of marine organisms, and then affect their survival and reproduction.

In addition, the bulky volume and weight of the galvanized steel wires also lead to high transportation costs. The transportation process requires more resources and more complex logistics arrangements, which not only increases costs but also increases storage difficulties.

In view of this, embodiments of the present application provide a lightweight submarine cable and a production method therefor. The lightweight submarine cable includes an optical fiber unit and at least one armor layer. The optical fiber unit includes at least one optical fiber. The armor layer surrounds the outer side of the optical fiber unit and is formed by spirally stranding a plurality of plastic-coated steel wires. Where, the plastic-coated steel wire is formed by wrapping a plastic layer around a steel wire core. With this arrangement, the steel wire core in the plastic-coated steel wire can enhance the mechanical strength of the armor layer, ensuring the stability of the armor layer in submarine environment. At the same time, the plastic layer in the plastic-coated steel wire can reduce the weight of the armor layer, and can provide the armor layer with excellent corrosion resistance and flexibility. In this way, using plastic-coated steel wires as the armor layer of the lightweight submarine cable can effectively reduce the weight of the lightweight submarine cable while enabling the lightweight submarine cable to meet the requirements of high tensile strength. Moreover, the lightweight submarine cable can have excellent corrosion resistance and flexibility, effectively resisting physical wear and chemical erosion on the seabed, and prolonging the service life of the lightweight submarine cable.

In order to make the above objectives, features, and advantages of the embodiments of the present application more obvious and understandable, the technical solutions in the embodiments of the present application will be clearly and completely described below in conjunction with the accompanying drawings in the embodiments of the present application. Apparently, the described embodiments are merely a part of the embodiments of the present application, rather than all of the embodiments. Based on the embodiments of the present application, all other embodiments obtained by those of ordinary skill in the art without creative effort fall within the protection scope of the present application.

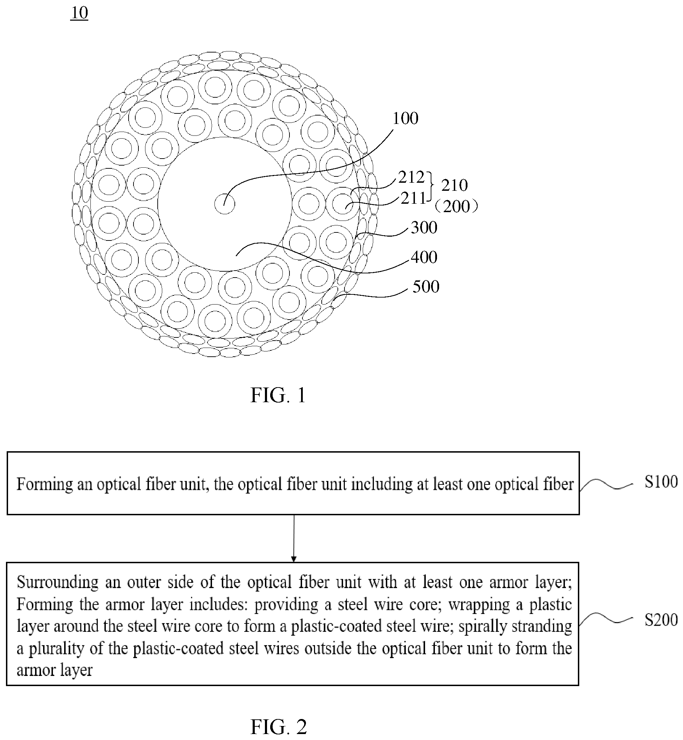

FIG. 1 is a structural schematic diagram of a lightweight submarine cable provided by an embodiment of the present application. Referring to FIG. 1, an embodiment of the present application provides a lightweight submarine cable 10. The lightweight submarine cable 10 is small in weight and prone to laying and maintenance, and can be laid in complex submarine environment. The lightweight submarine cable 10 can be applied to fields such as transoceanic communications, submarine observation systems, and marine resource exploration. Alternatively, the lightweight submarine cable 10 can also be used in the connection of offshore wind farms and ocean oil platforms to ensure smooth and unobstructed communication and data exchange between these facilities and onshore infrastructure.

The lightweight submarine cable 10 includes an optical fiber unit 100 and at least one armor layer 200. The optical fiber unit 100 includes at least one optical fiber (not shown in the figure), and the optical fiber is used to achieve high-speed, high-capacity data transmission. The armor layer 200 surrounds an outer side of the optical fiber unit 100 and can provide an important physical barrier for the optical fiber unit 100, preventing the optical fiber unit 100 from external mechanical damage, such as scraping and impact from seabed rocks, fishing gear, or anchors. Moreover, during the laying and maintenance of the lightweight submarine cable 10, the armor layer 200 can provide necessary tensile strength, which ensures that optical fibers are not damaged during stretching and bending, thereby ensuring that the lightweight submarine cable 10 can operate reliably for a long time in the complex marine environment.

Specifically, the optical fiber unit 100 may include a plurality of optical fibers (not shown in the figure), which are spirally stranded together, and a loose tube is sheathed over the optical fibers (not shown in the figure). The loose tube can be made of stainless steel or other corrosion-resistant metal materials. The loose tube can provide a buffer space for the optical fibers, allowing the optical fibers to have a certain movement space when subjected to external impact or vibration, reducing direct mechanical damage to the optical fibers.

In addition, gaps between the optical fibers and gaps between the optical fibers and the loose tube can be filled with water-blocking fiber paste (not shown in the figure). The water-blocking fiber paste can form a waterproof barrier, preventing moisture from entering the interior of the optical fibers under high pressure and high humidity conditions, ensuring the stability of signal transmission, and helping to extend the service life of the lightweight submarine cable 10.

Referring to FIG. 1, in this embodiment, the armor layer 200 is composed of plastic-coated steel wires 210. The plastic-coated steel wire 210 includes a steel wire core 211 and a plastic layer 212 wrapped around the steel wire core 211. Where the steel wire core 211 can enhance the mechanical strength of the armor layer 200, ensuring its stability in the submarine environment. The plastic layer 212 can reduce the weight of the armor layer 200, and can provide the armor layer 200 with excellent corrosion resistance and flexibility, effectively resisting physical wear and chemical erosion on the seabed.

Compared with traditional submarine cables that usually use the galvanized steel wires as the armor layer, the material of the armor layer 200 of the lightweight submarine cable 10 of this embodiment adopts plastic-coated steel wires 210, which can effectively reduce the overall weight of the lightweight submarine cable 10, making the lightweight submarine cable 10 more flexible during laying and capable of adapting to complex submarine terrains, and reducing the impact on the marine ecology. Moreover, the plastic layer 212 has excellent corrosion resistance, which can extend the service life of the lightweight submarine cable 10 in seawater, reduce the frequency of maintenance and replacement, and help reduce costs and improve production efficiency.

In a possible implementation, the plastic layer 212 can be configured as a fiber-reinforced composite layer, which is formed of fiber-reinforced composite materials. By adding fibrous materials to the plastic, such as glass fibers, carbon fibers, aramid fibers, etc., the strength, rigidity, and heat resistance of the plastic layer 212 can be further improved while maintaining its lightweight characteristics. The fiber-reinforced composite layer can provide higher tensile strength and anti-bending rigidity than a pure plastic layer 212, which can effectively resist chemical erosion and physical wear in the marine environment, further improving the stability of the armor layer in a chemical environment, and extending the service life of the armor layer.

Of course, the plastic layer 212 can also be made of materials such as polyvinyl chloride, polyethylene, and polypropylene, as long as it has good strength, flexibility, abrasion resistance, and corrosion resistance. This embodiment does not make any specific limitations on this.

In addition, a ratio of the steel wire core 211 to the plastic layer 212 in the plastic-coated steel wire 210 can be set according to actual production needs, which is not specifically limited in this embodiment. Exemplarily, a thickness of the plastic layer 212 can be set between 0.4 and 0.6 mm.

The plurality of plastic-coated steel wires 210 are spirally stranded to form the armor layer 200. A stranding pitch can be set to 15 to 20 times an outer diameter. The stranding pitch refers to an axial distance required for a plastic-coated steel wire 210 forming a helix to complete a full 360-degree rotation in a stranded structure. In this way, it can be ensured that the armor layer 200 provides sufficient tensile strength and lateral pressure resistance for the lightweight submarine cable 10, while maintaining circular shape of the lightweight submarine cable 10 and preventing the lightweight submarine cable 10 from deformation under external forces.

In addition, in order to prevent moisture penetration, gaps between the plurality of plastic-coated steel wires 210 can be filled with a water-blocking material. Exemplarily, modified asphalt with high viscosity can be used to coat the gaps between the plastic-coated steel wires 210 to ensure the stability and reliability of the lightweight submarine cable 10 during use and extend the service life of the lightweight submarine cable 10.

In a possible implementation, the armor layer 200 can be provided in a plurality of layers according to actual production demands. Referring to FIG. 1, the armor layers 200 can be stacked in sequence from inside to outside to further improve the tensile strength of the lightweight submarine cable 10.

Referring to FIG. 1, a wrapping layer 300 can be provided on an outer side of the armor layer 200. The wrapping layer 300 is tightly wrapped around the armor layer 200, preventing the armor layer 200 from loosening or shifting during use, and ensuring the structural integrity of the lightweight submarine cable 10. Exemplarily, the wrapping layer 300 can be formed of a high-strength cloth tape with excellent tensile strength and abrasion resistance, and firmly tied on the outer side of the armor layer 200 to improve the activity strength and stability of the lightweight submarine cable 10. Exemplarily, the high-strength cloth tape can be made of materials such as aramid fiber cloth tape or polyester fiber cloth tape.

Continuing to refer to FIG. 1, the lightweight submarine cable 10 further includes an inner sheath layer 400. The inner sheath layer 400 is disposed between the optical fiber unit 100 and the armor layer 200, which can prevent moisture penetration and prevent abrasion of the optical fiber unit 100. The inner sheath layer 400 can be made of a polymer plastic material with excellent waterproof and abrasion-resistant properties, such as polyethylene, polyvinyl chloride, etc.

In a possible implementation, an inner cushion layer can be provided between the inner sheath layer 400 and the armor layer 200. Since the material of the armor layer 200 is relatively hard, the inner cushion layer can provide an additional barrier between the inner sheath layer 400 and the armor layer 200, reducing direct friction between the inner sheath layer 400 and the armor layer 200, and preventing the armor layer 200 from abrading the inner sheath layer 400 and the optical fiber unit 100. Therefore, a material of the inner cushion layer needs to have good flexibility. Exemplarily, the inner cushion layer can be formed by winding polypropylene rope around an outer side of the inner sheath layer 400.

Of course, in order to increase the corrosion resistance and waterproofness of the lightweight submarine cable 10, an outer surface of the inner cushion layer can also be coated with a layer of high-viscosity modified asphalt.

Continuing to refer to FIG. 1, the lightweight submarine cable 10 further includes an outer sheath layer 500. The outer sheath layer 500 is disposed on an outer side of the wrapping layer 300. The outer sheath layer 500 can be provided in a plurality of layers, which can play a role in buffering the impact of external force and resisting abrasion, protecting the internal structure from damage. Exemplarily, the outer sheath layer 500 can be formed by winding a relatively soft polypropylene rope with good chemical resistance and abrasion resistance. Alternatively, the outer sheath layer 500 can also be formed by extruding polyethylene. This is not specifically limited in this embodiment.

FIG. 2 is a step flow chart of a production method for a lightweight submarine cable provided by an embodiment of the present application. Referring to FIG. 2, an embodiment of the present application also provides a production method for a lightweight submarine cable, which is used to manufacture the aforementioned lightweight submarine cable 10.

Specifically, the production method includes the following steps:
S100, forming an optical fiber unit, the optical fiber unit including at least one optical fiber.

When the optical fiber unit 100 is formed, first, high-quality, low-loss, and high-bandwidth communication optical fibers are selected to ensure signal transmission quality. In order to further protect the optical fibers and enhance their performance in humid environments, gaps between the optical fibers are filled with a water-blocking material. Exemplarily, the gaps between the optical fibers can be coated with water-blocking fiber paste.

Stainless steel or other corrosion-resistant metal materials are selected as base materials for manufacturing the loose tube. Exemplarily, the metal material is cut into steel strips with appropriate width and placed into a forming mold, which are then bent into a tubular shape by mechanical or hydraulic means. Laser welding technology is used to weld gaps on both sides of the tubular structure, ensuring the continuity and sealing of the weld seam to prevent the intrusion of external substances.

After welding, appropriate grinding tools such as grinding wheels or polishing machines are used to perform surface grinding treatment on welded parts to make welded surface smooth and eliminate possible burrs or irregular sharp parts.

Afterwards, the optical fibers are drawn into the loose tube. In addition, by controlling parameters of the production line equipment, a laying tension of the optical fibers during production and a length of the loose tube during forming are adjusted, so that the optical fibers can maintain a certain activity space inside the loose tube. In this way, the loose tube can effectively absorb external stress and vibration, protect the optical fibers from mechanical impact and environmental factors, and ensure the stability and reliability of the optical fibers during signal transmission.

It can be understood that in order to achieve a better water-blocking effect and prevent water infiltration, an inner wall of the loose tube can also be coated with a layer of water-blocking fiber paste.

S200, surrounding an outer side of the optical fiber unit with at least one armor layer. Where, forming the armor layer includes: providing a steel wire core; wrapping a plastic layer around the steel wire core to form a plastic-coated steel wire; spirally stranding a plurality of plastic-coated steel wires outside the optical fiber unit to form the armor layer.

After forming the optical fiber unit 100, an inner sheath layer 400 is coated on the outer side of the optical fiber unit 100. In order to prevent moisture from entering the optical fiber unit 100 and avoid signal attenuation and performance degradation due to damped optical fibers, the inner sheath layer 400 needs to have excellent waterproof and abrasion-resistant properties. Exemplarily, the inner sheath layer 400 can be formed by extruding polyethylene material and forming a layer thereof on the outer side of the optical fiber unit 100 using an extruder. A thickness of the inner sheath layer 400 can be determined according to overall tensile strength requirements of the lightweight submarine cable 10, and usually between 2.5 mm and 4 mm.

In a possible implementation, an inner cushion layer can be coated on an outer side of the inner sheath layer 400 to reduce direct friction between the inner sheath layer 400 and the armor layer 200, preventing the armor layer 200 from abrading the inner sheath layer 400 and the optical fiber unit 100. Exemplarily, polypropylene rope can be wound around the inner sheath layer 400 as the inner cushion layer. Polypropylene rope has the characteristics of light weight, high strength, and corrosion resistance. In this way, additional cushioning and protection can be provided to the inner sheath layer 400 and the optical fiber unit 100 without significantly increasing the weight of the lightweight submarine cable 10.

Afterwards, the steel wire core 211 is provided, and the plastic layer 212 is wrapped around the steel wire core 211 to obtain the plastic-coated steel wire 210. Exemplarily, the extruder can be used to uniformly extrude molten plastic and coat it on an outer side of the steel wire core 211. A thickness of the plastic layer can be selected according to actual production needs, and usually the thickness of the plastic layer can be set between 0.4 mm and 0.6 mm. Where, the plastic layer 212 may be made of materials such as a fiber-reinforced composite layer, polyvinyl chloride, polyethylene, and polypropylene. This is not specifically limited in this embodiment.

In addition, in order to ensure the roundness of the lightweight submarine cable 10 and prevent seawater from corroding the plastic-coated steel wires 210, gaps between the plastic-coated steel wires 210 can be filled with a water-blocking material. For example, a coating device can be used to coat the gaps of the plastic-coated steel wires 210 with modified asphalt. The modified asphalt is a type of material with excellent waterproof and adhesive properties, which can form a strong barrier in the gaps of the plastic-coated steel wires 210, effectively preventing seawater from penetrating into the interior of the plastic-coated steel wires 210. Moreover, the modified asphalt can also slow down a corrosion rate of the steel wire core by seawater and other substances after the plastic layer 212 of the plastic-coated steel wire 210 is damaged.

Afterwards, a plurality of plastic-coated steel wires 210 are manufactured according to the above method, and the plurality of plastic-coated steel wires 210 are stranded on the outer side of the inner cushion layer to form the armor layer 200. Specifically, a cage strander can be used for stranding. A stranding pitch can be set to 15 to 20 times its outer diameter. In this way, it can be ensured that the armor layer 200 has both good lateral pressure resistance and excellent tensile strength.

Of course, in order to further enhance the mechanical strength and tensile performance of the lightweight submarine cable 10, a multi-layer structure of armor layer 200 can be adopted. Referring to FIG. 1, multiple armor layers 200 are stacked in sequence and coated on the outer side of the inner cushion layer, so that when the lightweight submarine cable 10 faces a complex marine environment, the multiple armor layers 200 can provide higher safety and reliability.

A wrapping layer 300 is coated on an outer side of the armor layer 200. The wrapping layer 300 uses a high-strength cloth tape with excellent tensile strength and abrasion resistance, which is tied tightly on the outer side of the armor layer 200 to prevent the armor layer 200 from loosening or shifting during use. Exemplarily, aramid fiber cloth tape or polyester fiber cloth tape can be used as the wrapping layer 300.

An outer sheath layer 500 is coated on an outer side of the wrapping layer 300 to provide cushioning protection for the lightweight submarine cable 10 during circulation, transportation, and construction. The outer sheath layer 500 can be formed by winding polypropylene rope. Alternatively, the outer sheath layer 500 can also be formed by extruding polyethylene material onto a surface of the armor layer 200 through an extrusion process. This is not specifically limited in this embodiment.

The outer sheath layer 500 can be provided in a plurality of layers, and the water-blocking asphalt can be coated between every two adjacent outer sheath layers 500. In this way, the waterproof performance of the lightweight submarine cable 10 can be effectively improved, and the overall corrosion resistance of the lightweight submarine cable 10 can be enhanced, which is conducive to extending the service life of the lightweight submarine cable 10.

In the description of the present application, it should be understood that, the orientations or positional relationships indicated by the terms "center", "longitudinal", "lateral", "length", "width", "thickness", "upper", "lower", "front", "rear", "left", "right", "vertical", "horizontal", "top", "bottom", "inner", "outer" etc., are based on the orientations or positional relationships shown in the accompanying drawings. They are merely for the convenience of describing of the present application and simplifying the description, rather than indicating or implying that the referred device or element must have a specific orientation, or be constructed and operated in a specific orientation, and thus cannot be construed as a limitation on the present application.

It should be noted that references in the specification to "one embodiment", "an example", "an exemplary embodiment", "some embodiments", etc., indicate that the embodiment may include a particular feature, structure, or characteristic, but not every embodiment necessarily includes the particular feature, structure, or characteristic. Moreover, such phrases do not necessarily refer to the same embodiment. Furthermore, when a particular feature, structure, or characteristic is described in connection with an embodiment, it is within the knowledge of those skilled in the art to implement such feature, structure, or characteristic in connection with other embodiments, whether explicitly or implicitly described.

Finally, it should be noted that the above embodiments are only used to illustrate the technical solutions of the present application, rather than to limit them. Although the present application has been described in detail with reference to the foregoing embodiments, persons of ordinary skill in the art should understand that they can still modify the technical solutions described in the foregoing embodiments, or make equivalent substitutions for some or all of the technical features thereof. These modifications or substitutions do not cause the essence of the corresponding technical solutions to deviate from the scope of the technical solutions of the embodiments of the present application.

## Claims

1. A lightweight submarine cable, comprising:
an optical fiber unit (100), comprising at least one optical fiber;
at least one armor layer (200), surrounding an outer side of the optical fiber unit (100), wherein the armor layer (200) comprises a plurality of spirally-stranded plastic-coated steel wires (210), and each plastic-coated steel wire comprises a steel wire core (211) and a plastic layer (212) wrapped around the steel wire core (211).

2. The lightweight submarine cable according to claim 1, wherein the plastic layer (212) is a fiber-reinforced composite layer.

3. The lightweight submarine cable according to claim 1, wherein at least two armor layers (200) are provided, and the at least two armor layers (200) are each stacked in sequence from inside to outside.

4. The lightweight submarine cable according to claim 1, wherein gaps between the plastic-coated steel wires (210) are filled with a water-blocking material.

5. The lightweight submarine cable according to any one of claims 1-3, wherein the optical fiber unit (100) comprises a plurality of the optical fibers, the plurality of optical fibers are each spirally stranded, and the optical fiber unit (100) further comprises a loose tube sheathed over all the optical fibers;
wherein gaps between the optical fibers and gaps between the optical fibers and the loose tube are filled with a water-blocking fiber paste.

6. The lightweight submarine cable according to any one of claims 1-3, further comprising: an inner sheath layer (400), disposed between the optical fiber unit (100) and the armor layer (200).

7. The lightweight submarine cable according to claim 6, further comprising: at least one outer sheath layer (500), surrounding an outer side of the armor layer (200).

8. The lightweight submarine cable according to claim 7, further comprising: a wrapping layer (300), disposed between the armor layer (200) and the outer sheath layer (500).

9. A production method for a lightweight submarine cable, applied to the lightweight submarine cable according to any one of claims 1-8, wherein the production method comprises:
forming the optical fiber unit (100), the optical fiber unit (100) comprising at least one optical fiber;
surrounding an outer side of the optical fiber unit (100) with the at least one armor layer (200);
wherein the forming the armor layer (200) comprises:
providing the steel wire core (211);
wrapping the plastic layer (212) around the steel wire core (211) to form the plastic-coated steel wire (210);
spirally stranding a plurality of the plastic-coated steel wires (210) outside the optical fiber unit (100) to form the armor layer (200).

10. The production method according to claim 9, wherein after forming the armor layer (200), the production method further comprises:
filling gaps between the plastic-coated steel wires (210) with a water-blocking material.

11. The production method according to claim 9, wherein the optical fiber unit (100) comprises a plurality of optical fibers, and forming the optical fiber unit (100) comprises:
drawing each of the optical fibers;
sheathing a loose tube over all the optical fibers, and filling gaps between the optical fibers and gaps between the optical fibers and the loose tube with a water-blocking fiber paste.

12. The production method according to claim 9, wherein after surrounding the outer side of the optical fiber unit (100) with the armor layer (200), the production method further comprises:
forming a wrapping layer (300) by winding outside the armor layer (200);
forming at least one outer sheath layer (500) by winding outside the wrapping layer (300).
